# EUROPEAN PATENT APPLICATION

(11) **EP 3 139 479 A1**
(43) Date of publication of application: **08.03.2017**
(21) Application number: 16186304.8
(22) Date of filing: 30.08.2016
(51) Int. Cl.: H02K 21/18, H02K 29/03, H02K 1/14

(54) **SINGLE PHASE PERMANENT MAGNET MOTOR AND STATOR CORE THEREOF**

(30) Priority: 01.09.2015 CN 201510553299
(71) Applicant: Johnson Electric S.A., 3280 Murten (CH)
(72) Inventor: Li, Yue, Shatin, N.T. (HK); Zhou, Chui You, Shatin, N.T. (HK); Wang, Yong, Shatin, N.T. (HK); Li, Yong, Shatin, N.T. (HK)
(74) Representative: Hocking, Adrian Niall

(57) **Abstract**

A single phase permanent magnet motor includes a stator core (10), windings wound around the stator core (10), and a permanent magnet rotor rotatable relative to the stator core (10). The stator core (10) includes an end portion (14), a first pole arm (18) connected with the end portion (14), and a second pole arm (20) connected with the end portion (14) and stacked with the first pole arm in an axial direction of the stator core (10). The first pole arm (18) has a shape or structure different from that of the second pole arm (20).

## Description

### FIELD OF THE INVENTION

The present invention relates to single phase motors, and in particular to a stator core of a single phase permanent magnet motor.

### BACKGROUND OF THE INVENTION

A single phase permanent magnet motor usually consists of a stator core, stator windings, and a permanent magnet rotor. The stator core is generally U-shaped, including two spaced pole arms. A pole claw is formed at a distal end of each pole arm. An inner wall surface of each pole claw is inwardly recessed to form an arc pole surface. The windings are wound around the pole arms. The rotor is disposed between the two pole claws and confronts the arc pole surface. In this type of motor, the pole arms of the stator core are separated apart, with large openings formed between the two pole claws. The openings lead to a large cogging torque formed between the stator and the rotor, thus making the motor operation unstable and causing noise.

### SUMMARY OF THE INVENTION

Thus, there is a desire for a single phase permanent magnet motor and a stator core thereof that can effectively improve the stability of the motor operation and reduce the noise.

In one aspect, the present invention provides a stator core comprising an end portion; a first pole arm connected with the end portion; and a second pole arm connected with the end portion and stacked with the first pole arm in an axial direction of the stator core, the first pole arm having a shape or structure different from that of the second pole arm.

Preferably, the first pole arm forms a first arc pole surface which is discontinuous along a circumferential direction, and the second pole arm forms a second pole surface which is discontinuous along a circumferential direction.

Preferably, the first arc pole surface is discontinued at a location between the two first connecting arms.

Preferably, a width of the discontinuity in the arc pole surface is substantially equal to a distance between the two connecting arms.

Preferably, the stator core comprises one said first pole arm and two said second pole arms, and said first pole arm is sandwiched between said two second pole arms.

Preferably, the stator core comprises two said first pole arms and one said second pole arm, and said second pole arm is sandwiched between said first pole arm.

Preferably, the stator core comprises a plurality of first pole arms and a plurality of second pole arms alternatively stacked along the axial direction.

Preferably, each of the end portion, the first pole arm and the second pole arm is formed by stacking a plurality of core laminations and are mechanically connected with each other.

Preferably, one of the first pole arm and the end portion forms a locking groove, and the other of the first pole arm and the end portion forms a locking block; one of the second pole arm and the end portion forms a locking groove, and the other of the second pole arm and the end portion forms a locking block; each locking groove is engaged in one corresponding locking groove to interconnect the first pole arm, the second pole arm and the end portion together.

Preferably, wherein the first arc pole surface is inwardly recessed to form two startup grooves, and the startup grooves are offset from a central axis of the pole claws.

Preferably, a magnetic bridge is formed at a connecting area between the two second pole claws.

In a third aspect, the present invention provides a single phase permanent magnet motor comprising a stator core, windings wound around the stator core, and a permanent magnet rotor rotatable relative to the stator core. The stator core comprises an end portion; a first pole arm connected with the end portion; and a second pole arm connected with the end portion and stacked with the first pole arm in an axial direction of the stator core, the first pole arm having a shape or structure different from that of the second pole arm.

### BRIEF DESCRIPTION OF THE DRAWINGS

Fig. 1 illustrates a single phase permanent magnet motor according to one embodiment of the present invention.
Fig. 2 is an exploded view of the motor of Fig. 1.
Fig. 3 is a top view of the motor of Fig. 1.
Fig. 4 is a bottom view of the motor of Fig. 1.
Fig. 5 illustrates a stator core of a single phase permanent magnet motor according to a second embodiment.
Fig. 6 illustrates a stator core of a single phase permanent magnet motor according to a third embodiment.

### DETAILED DESCRIPTION OF THE PREFERRED EMBODIMENTS

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

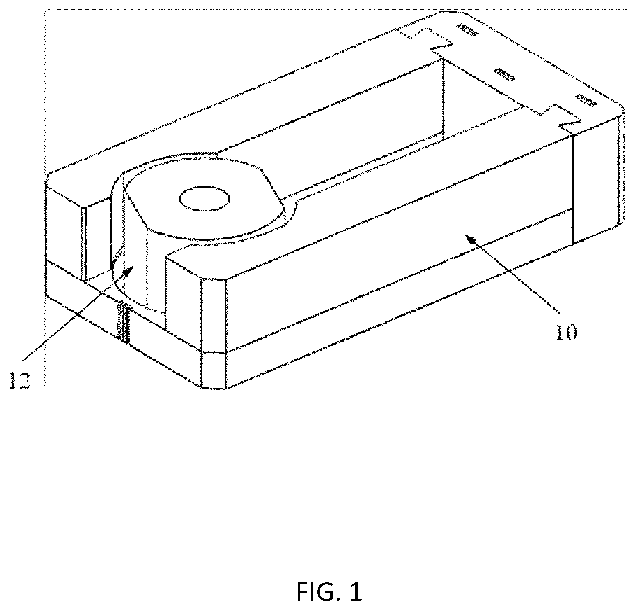

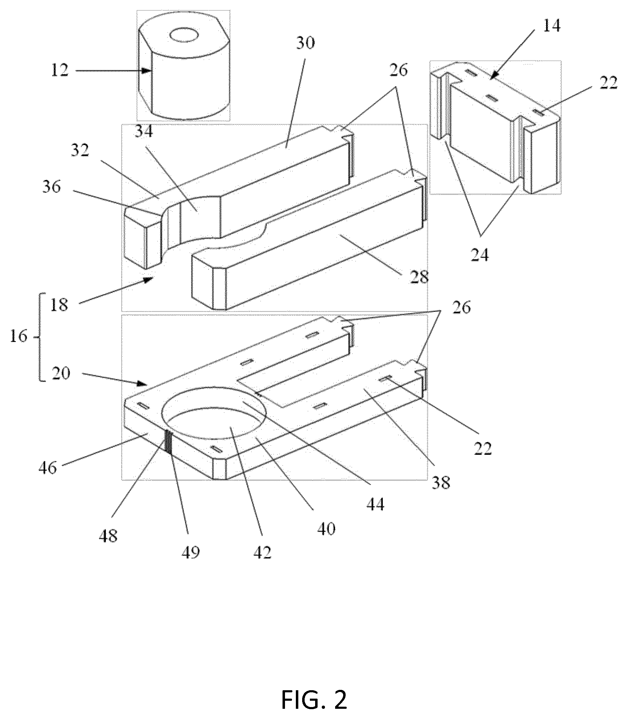

Fig. 1 to Fig. 2 illustrate a single phase permanent magnet motor according to one embodiment of the present invention. The motor includes a stator core 10, windings (not shown) wound around the stator core 10, and a permanent magnet rotor 12 rotatably disposed in the stator core 10. In the figures, for the sake of clearly showing the structure and features of the stator core 10 of the motor of the present invention, some parts of the motor, such as the windings, a control circuit for controlling the current of the windings, a motor housing or the like, are not shown, which can be constructed as in a known single phase permanent magnet motor. A rotary shaft may fixedly pass through the permanent magnet rotor 12 for connecting with a load. Upon the windings being energized, the stator core 10 is polarized which interacts with the magnetic field of the permanent magnet rotor 12 to push the permanent magnet rotor 12 to rotate, which in turn drives the load to operation.

The stator core 10 may be made from a soft magnetic material such as ferrite. Preferably, in the present embodiment, the stator core 10 is a U-shaped stator core including an end portion 14 and a pole arm 16 perpendicularly extending outwardly from the end portion 14. In this embodiment, the pole arm 16 includes at least a first pole arm 18 and a second pole arm 20. The first pole arm 18 and the second pole arm 20 are stacked with each other in an axial direction of the rotor 12 and are connected to the same side of the end portion 14. In this embodiment, the end portion 14, the first pole arm 18 and the second pole arm 20 are separately formed and then are connected together through mechanical connections. As such, the winding process can be completed before the first pole arm 18 and the second pole arm 20 are connected to the end portion 14, which makes the winding process easier and more convenient.

Preferably, each of the end portion 14, first pole arm 18 and second pole arm 20 is made by stacking a plurality of laminations such as silicon steel sheets. The figures only show the overall shapes of the end portion 14, first pole arm 18 and second pole arm 20 after the laminations are stacked, without showing specific structures of the multiple stacked layers. For facilitating the assembly of the laminations, each lamination is formed with a corresponding assembly hole 22. In this embodiment, the assembly hole 22 is a blind hole and the lamination has a protrusion corresponding to the blind hole. In stacking the laminations, the protrusion of one lamination is engaged in the assembly hole of an adjacent lamination so as to form a mechanical connection there between. The end portion 14, the first pole arm 18 and the second pole arm 20 are respectively formed by the methods.

In this embodiment, the end portion 14 forms two locking grooves 24 at locations adjacent two sides thereof. The locking grooves 24 extend through the end portion 14 along the axial direction. The pole arm 16, including the first pole arm 18 and the second pole arm 20, forms locking blocks 26 corresponding to the locking grooves 24. The locking blocks 26 is inserted into the locking grooves 24 along the axial direction to connect the pole arm 16 with the end portion 14, thus forming the stator core 10. Preferably, the locking block 26 is dovetail shaped and the locking groove 24 has a shape matching the locking block 26, so that the connection between the locking block 26 and the locking groove 24 is strengthened, to avoid disengagement there between. In another embodiment, the locking grooves 24 may be formed in the first pole arm 18 and the second pole arm 20, the locking blocks 26 are correspondingly formed on the end portion 14, and the end portion 14, the first pole arm 18 and the second pole arm are connected together to cooperatively form the stator core 10.

The first pole arm 18 includes two separate arm portions 28. The two arm portions 28 have substantially the same construction and, are spaced apart and disposed in parallel with each other. Each arm portion 28 is elongated, including a first connecting arm 30 and a first pole claw 32 formed at a distal end of the first connecting arm 30 away from the end portion 14. An end face of the other distal end of the first connecting arm 30 facing the end portion 14 projects outwardly to form the locking block 26 for connecting with the locking groove 24 of the end portion 14. The first pole claws 32 of the two arm portions 28 are opposed to and spaced from each other, and cooperatively define a receiving space for receiving the rotor 12 there between. Opposed inner wall surfaces of the two first pole claws 32 are recessed to form a first arc pole surface 34. The first arc pole surface 34 confronts and is spaced from an outer surface of the rotor 12, with an air gap formed between the first arc pole surface 34 and the rotor 12.

Because the two first pole claws 32 of the first pole arm 18 are separately from each other, the first arc pole surfaces 34 is discontinuous in a circumferential direction, with two spaces defined in a circumference of the first arc pole surfaces 34, and a width of the space is substantially equal to a spaced distance between the first connecting arms 30, which is large. Because the first arc pole surface 34 are discontinuous along the circumferential direction and the width between the arc pole surface 34 is large, a large magnetic reluctance is formed at the discontinued area, which reduces magnetic leakage and hence enhances the efficiency of the motor. On the other hand, however, a large cogging torque is formed at the discontinued area, which affects the rotation of the rotor 12 and causes noise.

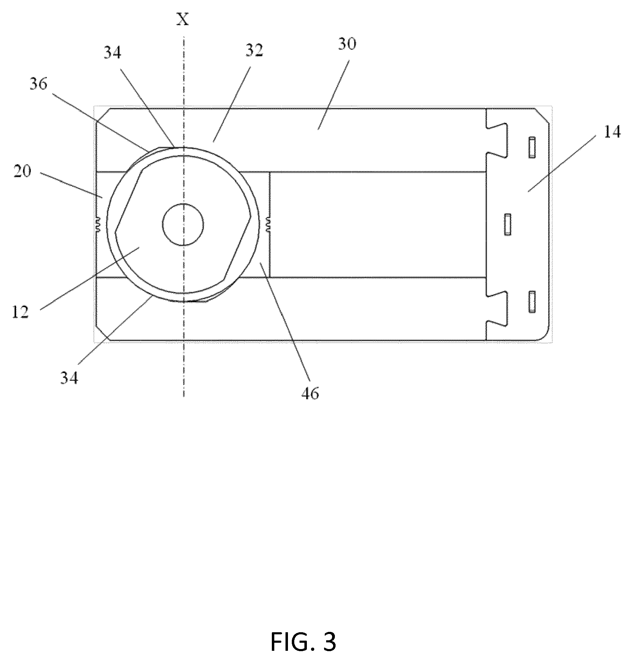

Preferably, an inwardly-recessed startup groove 36 is formed in the first arc pole surface 34. The startup groove 36 is offset from a central axis X (Fig. 3) of the first pole claw 32 by an angle. In this embodiment, there are two startup grooves 36 that are spaced 180 degrees from each other along the circumferential direction and disposed symmetrically with respect to the rotation axis of the rotor 12. One startup groove 36 extends inwardly along a clockwise direction from an end of one corresponding first pole claw 32 remote from the first connecting arm 30 with a depth gradually increasing, and the other start up groove 36 extends inwardly along an anticlockwise direction from an end of the corresponding first pole claw 32 adjacent to the first connecting arm with a depth gradually increasing. The presence of the startup grooves 36 makes the air gap between the first arc pole surface 34 and the rotor 12 uneven, such that when the motor is powered off and stops rotation, a pole axis of the rotor 12, i.e., an axis passing through the centers of the magnetic poles, is offset from the central axis X of the first pole claw 32 by an angle, such that the rotor is avoided from stopping at a dead point, thereby ensuring that the motor can be successfully started upon being energized.

The second pole arm 20 is generally U-shaped, including two second connecting arms 38 and two second pole claws 40 formed at distal ends of the two second connecting arms 38. The two second connecting arms 38 are spaced from and disposed in parallel with each other. An end face of each second connecting arm 38 projects outwardly to form one locking block 26 for connecting with the locking groove 24 of the end portion 14. The two pole claws 40 are disposed away from the end portion 14 and connected together. A circular hole 42 is defined in a center of the connected pole claws 40, for receiving the rotor 12. A diameter of the circular hole 42 is slightly greater than an outer diameter of the rotor 12. In this embodiment, the circular hole 42 extends through the second pole claws 40 along the axial direction, with a closed circumference around the circular hole 42. The second pole claws 40 surround the circular hole 42 and form a second arc pole surface 44 confronting the rotor 12. The second arc pole surface 44 is a continuous arc surface along the circumferential direction. Preferably, the second arc pole surface 44 of the two second pole claws 40 forms a substantially standard cylindrical surface which is coaxial with the rotor 12 with a continuous and substantially even air gap formed there between.

Different from the first pole claws 32 of the first pole arm 18, the second pole claws 40 of the second pole arm 20 are connected together, with two cross beams 46 formed between the two second connecting arms 38. The cross beams 46, the second connecting arm 38 and the end portion 14 together form a magnetic path not passing through the rotor 12, which to some extent causes magnetic leakage and hence reduces the power density of the motor. Preferably, a magnetic bridge 48 is formed at a connecting area between the two second pole claws 40,preferably a middle of the cross beam 46. The magnetic bridge 48 has the smallest thickness in comparison with the remaining portion of the pole claws 40 to increase magnetic reluctance and reduce the magnetic leakage. More preferably, one or more grooves 49 are formed in an outer wall surface of the magnetic bridge 48. The grooves 49 extend axially through the magnetic bridge 48.

Different from the first pole claws 32 of the first pole arm 18, the second pole claws 40 of the second pole arm 20 are connected together. After assembled with the rotor 12, the second arc pole surface 44 of the second pole arm 20 and the outer wall surface of the rotor 12 form there between the continuous air gap which effectively reduces the cogging torque. This makes the rotor 12 rotation more smooth and reduces the noise during motor operation. In this embodiment, because the second arc pole surface is a cylindrical surface, a radial distance between the second arc pole surface and the outer wall surface of the rotor 12 is constant. Therefore, the even air gap is formed between the second arc pole surface and the outer wall surface of the rotor 12, which can maximally reduce the cogging torque and the noise during operation of the motor.

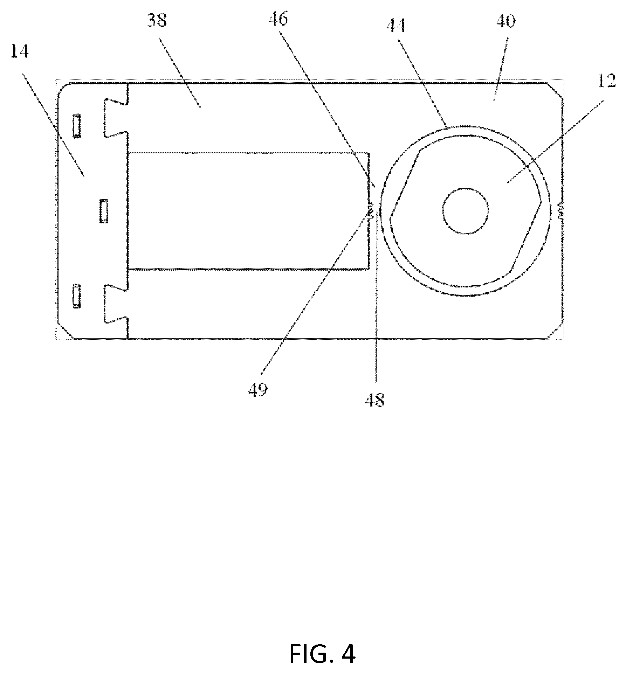

Referring to Fig. 3 and Fig. 4, the first pole arm 18 and the second pole arm 20 are stacked in the axial direction of the rotor 12, with each first connecting arm 30 stacked on one corresponding second connecting arm 38 to cooperatively from one connecting arm of the pole arm 16. In this embodiment, the two connecting arms of the pole arm 16 are spaced from and disposed in parallel with each other, with a winding space formed there between. The windings are wound around the two connecting arms. There are typically two windings connected in series. Each of the two first pole claws 32 is stacked with one second pole claw 40 to cooperatively form one pole claw of the pole arm 16 for interacting with the rotor 12. The first arc pole surface 34 and the second arc pole surface 44 are substantially coaxial, have substantially the same diameter, and cooperatively form an arc pole surface of the pole arm 16.

For the motor of the present invention, the pole arm 16 of the stator core 10 is formed by the first pole arm 18 and the second pole arm 20 stacked with each other. The arc pole surface has a first axial portion continuous in circumferential direction, and a second axial portion discontinuous along the circumferential direction. The continuous portion is the second arc pole surface 44 and the discontinuous portion is the first arc pole surface 34. As such, the first pole arm 18 and the second pole arm 20 cooperate to gain a balance between efficiency and noise - the two important performance, thereby enhancing the overall performance of the motor.

In addition, the arc pole surface and the rotor 12 form an uneven air gap at the area of the startup groove 36, and form an even air gap at the area without the startup groove 36, which ensures the successful startup of the rotor. In the above embodiment, the startup grooves 36 are formed in the first arc pole surface 34 of the first pole claws 32 only. In some other embodiments, the startup grooves 36 can be formed in the second arc pole surface 44 of the second pole claws 40, or formed in both of the first and second arc pole surfaces 34, 44. It should be understood that a driving circuit may be designed to suit particular requirements on the startup direction of the motor. In addition, the startup groove 36 may be modified in various length and depth to meet different requirements and should not be limited to the particular constructions as illustrated.

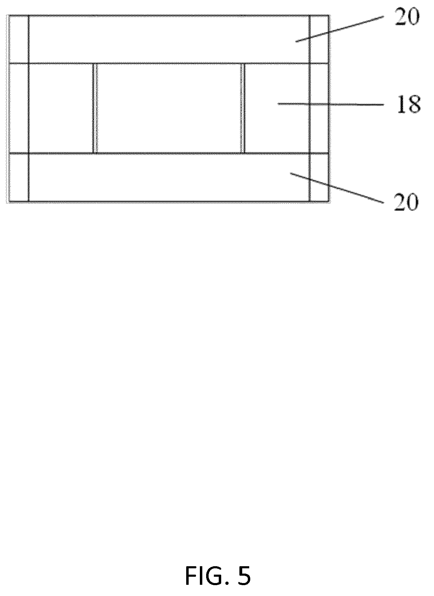

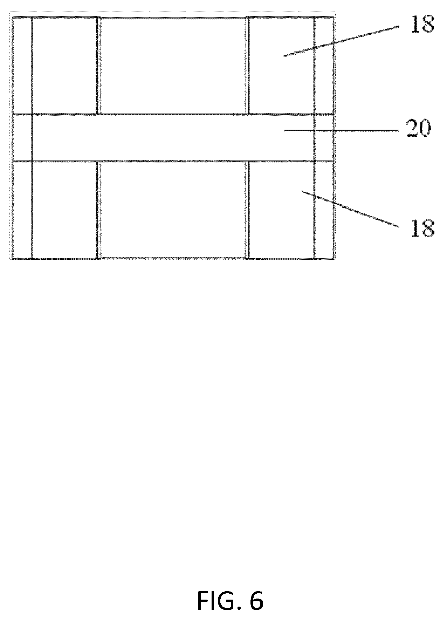

In the above embodiment, a single first pole arm 18 is combined with a single second pole arm 20 to form the stator core 10. In some other embodiments, the first pole arm 18 and second pole arm 20 may be combined in different patterns. Referring to Fig. 5, a single first pole arm 18 is combined with two second pole arms 20, with the first pole arm 18 sandwiched between the two second pole arms 20. Alternatively, referring to Fig. 6, a single second pole arm 20 is combined two first pole arms 18, with the second pole arm 20 sandwiched between the two first pole arms 18. In another alternative embodiment, multiple first pole arms 18 and multiple second pole arms 20 are alternatively stacked.

Although the invention is described with reference to one or more preferred embodiments, it should be appreciated by those skilled in the art that various modifications are possible. Therefore, the scope of the invention is to be determined by reference to the claims that follow.

## Claims

1. A stator core (10), comprising:
an end portion (14);
a first pole arm (18) connected with the end portion (14); and
a second pole arm (20) connected with the end portion (14) and stacked with the first pole arm in an axial direction of the stator core (10), the first pole arm having a shape or structure different from that of the second pole arm.

2. The stator core (10) of claim 1, wherein the first pole arm (18) forms a first arc pole surface (34) which is discontinuous along a circumferential direction, and the second pole arm (20) forms a second pole surface (44) which is discontinuous along a circumferential direction.

3. The stator core (10) of claim 2, wherein the first pole arm (18) comprises two spaced first connecting arms (30) and first pole claws (32) respectively formed at distal ends of the first connecting arms (30), the second pole arm (20) comprises two spaced second connecting arms (38) and second pole claws (40) respectively formed at distal ends of the second connecting arms (38), the two first pole claws (32) are separated from each other, the two second pole claws (40) are connected to each other.

4. The stator core (10) of claim 3, wherein the first arc pole surface is inwardly recessed to form two startup grooves (36), and the startup grooves (36) are offset from a central axis of the pole claws.

5. The stator core (10) of claim 3, wherein a magnetic bridge (48) is formed at a connecting area between the two second pole claws.

6. The stator core (10) of claim 3, wherein the first arc pole surface (34) is discontinued at a location between the two first connecting arms (30).

7. The stator core (10) of claim 6, wherein a width of the discontinuity in the arc pole surface is substantially equal to a distance between the two first connecting arms.

8. The stator core (10) of any one of claim 1 to claim 7, wherein the stator core (10) comprises one said first pole arm (18) and two said second pole arms (20), and said first pole arm (18) is sandwiched between said two second pole arms (20).

9. The stator core (10) of any one of claim 1 to claim 8, wherein the stator core (10) comprises two said first pole arms (18) and one said second pole arm (20), and said second pole arm (20) is sandwiched between said first pole arm (18).

10. The stator core (10) of any one of claim 1 to claim 9, wherein the stator core (10) comprises a plurality of first pole arms (18) and a plurality of second pole arms (20) alternatively stacked along the axial direction.

11. The stator core (10) of any one of claim 1 to claim 10, wherein one of the first pole arm (18) and the end portion (14) forms a locking groove (24), and the other of the first pole arm (18) and the end portion (14) forms a locking block (26); one of the second pole arm (20) and the end portion (14) forms a locking groove (24), and the other of the second pole arm (20) and the end portion (14) forms a locking block (26); each locking block (26) is engaged in one corresponding locking groove to interconnect the first pole arm, the second pole arm and the end portion (14) together.

12. A single phase permanent magnet motor comprising:
a stator core (10) according to any one of claim 1 to claim 11;
windings wound around the stator core (10), and
a permanent magnet rotor (12) rotatable relative to the stator core (10), the rotor (12) disposed in the space in the two pole claws, and the arc pole surface of the stator core (10) surrounding the rotor (12) with an air gap formed between the arc pole surface and the rotor (12).
